# EUROPÄISCHE PATENTSCHRIFT

(11) **EP 2 429 816 B1**
(45) Veröffentlichungstag und Bekanntmachung des Hinweises auf die Patenterteilung: **07.03.2018**
(21) Anmeldenummer: 10720125.3
(22) Anmeldetag: 04.05.2010
(51) Int. Cl.: B32B 27/08, B32B 27/18, B32B 27/36, B32B 27/20, B32B 27/30, C09D 5/00, C09D 7/12

(54) **WITTERUNGSSTABILE MEHRSCHICHTSYSTEME**
WEATHER-RESISTANT MULTILAYER SYSTEMS
SYSTÈMES MULTICOUCHES RÉSISTANT AUX INTEMPÉRIES

(30) Priorität: 12.05.2009 DE 102009020938
(43) Veröffentlichungstag der Anmeldung: 21.03.2012
(73) Patentinhaber: Covestro Deutschland AG, 51373 Leverkusen (DE)
(72) Erfinder: MEYER ZU BERSTENHORST, Birgit, 51375 Leverkusen (DE); STOLLWERCK, Gunther, 47802 Krefeld (DE); BUCKEL, Frank, 47906 Kempen (DE); PUDLEINER, Heinz, 47800 Krefeld (DE)
(74) Vertreter: Levpat
(86) Internationale Anmeldenummer: PCT/EP2010/002701
(87) Internationale Veröffentlichungsnummer: WO 2010/130350

(56) Entgegenhaltungen:
- EP-A2- 0 110 221
- EP-A2- 1 380 416
- WO-A1-03/049940
- WO-A1-2006/108520
- WO-A1-2009/049904
- US-A- 5 391 795
- US-A1- 2007 104 956

## Beschreibung

Die vorliegende Erfindung betrifft ein mehrschichtiges Erzeugnis umfassend vier Schichten, wobei die zweite und dritte Schicht ein Schichtverbund aus einem Thermoplasten und einem UV-stabilisierten Polycarbonat ist, und wobei die zweite Schicht eine UV-Schutzschicht auf Basis von Alkylacrylat und die erste Schicht eine Kratzschutzschicht, die ebenfalls UV-Absorber enthält, wobei die erste und zweite Schicht bestimmte Extinktionswerte aufweisen, und die vierte Schicht ebenfalls aus Polycarbonat besteht. Außerdem betrifft die Erfindung die Herstellung dieser mehrschichtigen Erzeugnisse und Erzeugnisse, wie z.B. Verscheibungen, die die genannten mehrschichtigen Erzeugnisse enthalten.

Formkörper aus Polycarbonat sind bereits seit längerem bekannt. Polycarbonat hat jedoch den Nachteil, dass es nicht selbst inhärent UV-stabil ist. Die Empfindlichkeitskurve von Bisphenol A-Polycarbonat weist die höchste Empfindlichkeit zwischen 320 nm und 330 nm auf. Unterhalb von 300 nm gelangt keine Sonnenstrahlung auf die Erde, und oberhalb von 350 nm ist dieses Polycarbonat so unempfindlich, dass keine Vergilbung mehr stattfindet.

Um Polycarbonat vor dem schädlichen Einfluss der UV-Strahlen in der Atmosphäre zu schützen, werden allgemein UV-Stabilisatoren eingesetzt, die die UV-Strahlung absorbieren und in unschädliche thermische Energie umwandeln.

Vorteilhaft für einen dauerhaften Schutz ist es dabei, die schädliche UV-Strahlung bereits vor Erreichen der Polycarbonatoberfläche effektiv herauszufiltern, wie es durch die Verwendung von UV-Schutz-Schichten, beispielsweise UV-Absorber-haltige Koextrusionsschichten, UV-Absorber-haltige Folien oder auch UV-Absorber-haltige Lacke, auf Polycarbonat möglich ist.

Typische UV-Absorber - Klassen, die bekanntermaßen hierfür zum Einsatz kommen können, sind 2-Hydroxy-benzophenone, 2-(2-Hydroxyphenyl)benzotriazole, 2-(2-Hydroxyphenyl)-1,3,5-triazine, 2-Cyanacrylate und Oxalanilide.

Im Folgenden wird beispielhaft der Stand der Technik zu mehrschichtigen Erzeugnissen zusammengefasst.

EP-A 0 110 221 offenbart Platten aus zwei Schichten Polycarbonat, wobei eine Schicht wenigstens 3 Gew.-% eines UV-Absorbers enthält. Die Herstellung dieser Platten kann gemäß EP-A 0 110 221 durch Coextrusion erfolgen.

EP-A 0 320 632 offenbart Formkörper aus zwei Schichten aus thermoplastischem Kunststoff, bevorzugt Polycarbonat, wobei eine Schicht spezielle substituierte Benzotriazole als UV-Absorber enthält. EP-A 0 320 632 offenbart auch die Herstellung dieser Formkörper durch Coextrusion.

EP-A 0 247 480 offenbart mehrschichtige Platten, in denen neben einer Schicht aus thermoplastischem Kunststoff eine Schicht aus verzweigtem Polycarbonat vorhanden ist, wobei die Schicht aus Polycarbonat spezielle substituierte Benzotriazole als UV-Absorber enthält. Die Herstellung dieser Platten durch Coextrusion wird ebenfalls offenbart.

EP-A 0 500 496 offenbart Polymerzusammensetzungen, die mit speziellen Triazinen gegen UV-Licht stabilisiert sind und deren Verwendung als Außenschicht in Mehrschichtsystemen. Als Polymere werden Polycarbonat, Polyester, Polyamide, Polyacetale, Polyphenylenoxid und Polyphenylensulfid genannt.

US 2006/0234061 A1 offenbart ein mehrschichtiges Erzeugnis umfassend eine erste und eine zweite Schicht, wobei die zweite Schicht Polycarbonat enthält, und wobei die erste Schicht eine UV-Schutzschicht auf Basis von Alkylacrylat ist, die ein biphenylsubstituiertes Triazin als UV-Stabilisator enthält.

WO 2006/121484 A2 offenbart eine Kunststoffplatte bestehend aus einer Polymerschicht, einer witterungsstabilen Folienschicht und einer Abriebschutzschicht und der Herstellung des Gesamtverbundes. Als Polymere werden Polycarbonat, Polymethylmethacrylat, Polyester, Polycarbonat/Acrylnitril Butadien Stryol Blend und Polycarbonat/Polyester Blend genannt.

WO 2009/049904 A1 offenbart ein mehrschichtiges Erzeugnis umfassend eine erste Schicht (A), eine zweite Schicht (B) und eine dritte Schicht (C), wobei die erste Schicht (A) eine Kratzfestschutzschicht ist, die eine Extinktion von mindestens 0,2 bei 340 nm besitzt, die zweite Schicht (B) eine Alkylacrylat Schicht ist, die eine Extinktion von mindestens 2 bei 340 nm besitzt und die dritte Schicht (C) ein UV stabilisiertes Polycarbonat enthält. Bei Schicht B) handelt es sich um eine Primerschicht als Haftvermittler, während Schicht B) gemäß vorliegender Anmeldung eine thermoplastische Schicht auf Basis eines Polyacrylats ist.

EP1380416 A2 beschreibt einmehrschichtiges Erzeugnis umfassend eine erste und eine zweite Schicht, wobei die erste Schicht ein Copolycarbonat nit Biphenyl-Einheiten als Comonomerbaustein aufweist. Mehrschichtige Erzeugnisse gemäß der vorliegenden Erfindung werden jedoch nicht beschrieben.

WO2003/049940 und US2007/104956 A1 beschreiben zwar mehrschichtige Erzeugnisse aus mehreren Schichten, wobei in einer Schicht auch UV Absorber der Formel (II) der vorleigenden Anmeldung enthalten sein kann. Mehrschichtige Erzeugnisse gemäß der vorliegenden Erfindung werden jedoch nicht beschrieben.

Es hat sich jedoch gezeigt, dass die bekannten UV-stabilisierten Polycarbonatformkörper für manche Anwendungen, insbesondere für Außenanwendungen mit dauerhaft hohen Anforderungen hinsichtlich des visuellen Eindrucks wie beispielsweise Verscheibungen eine noch ungenügende Langzeitstabilität gegen Vergilbung aufweisen. Zudem soll die Anzahl an Beschichtungsschritten so klein wie möglich gehalten werden, da dieses kostenaufwendig und fehleranfällig ist.

Für solche Anwendungen ist es erforderlich, dass ein Polycarbonatformkörper unter einer Einstrahlung von 30 MJ/m² bei 340 nm (entspricht 10 Jahren Außenbewitterung in Florida) um nicht mehr als Δ YI 3 vergilbt.

Die Bewitterung erfolgt bei diesem Test in einem Atlas Ci 5000 Weatherometer mit einer Bestrahlungsstärke von 0.75 W/m²/nm bei 340 nm und einem Trocken/-Beregnungszyklus von 102:18 Minuten. Die Schwarztafeltemperatur beträgt 70°C, die Probenraumtemperatur 55°C und die Luftfeuchtigkeit 40 %.

Der vorliegenden Erfindung liegt die Aufgabe zugrunde, Polycarbonatformkörper zur Verfügung zu stellen, die unter den genannten Bewitterungs-Bedingungen möglichst wenig vergilben (YI bzw. ΔYI möglichst klein). Desweiteren sollen möglichst wenig Beschichtungsschritte aus Gründen der Verarbeitungszeitreduzierung und der Anfälligkeit von Beschichtungsfehlern erforderlich sein.

Diese Aufgabe wird überraschenderweise gelöst durch
ein mehrschichtiges Erzeugnis umfassend eine erste Schicht (A), eine zweite Schicht (B), eine dritte Schicht (C) und eine vierte Schicht (D), wobei
die erste Schicht (A) eine Kratzfestschutzschicht ist, die eine Extinktion von mindestens 0,2 bei 340 nm besitzt, enthaltend einen UV-Absorber der Formel (I) 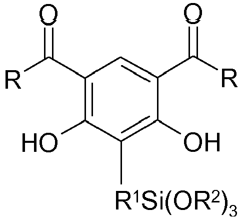 wobei R ein substituierter oder unsubstituierter monozyklischer oder polyzyklischer aromatischer Rest, R¹ ein verzweigtes oder unverzweigtes C₁-C₁₀-Alkyl und R² ein verzweigtes oder unverzweigtes C₁-C₆-Alkyl bedeuten,
die zweite Schicht (B) eine Polyacrylat Schicht ist, die Alkylmethacrylat als Monomerbaustein enthält und die eine Extinktion von mindestens 2 bei 340 nm besitzt, enthaltend einen UV-Absorber der Formel (II) 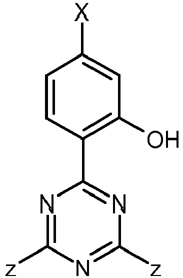 wobei
X OR¹ ; OCH₂CH₂OR¹; OCH₂CH(OH)CH₂OR¹ oder OCH(R²)COOR³ bedeutet, dabei steht, R¹ für jeweils C₁-C₁₃-Alkyl, C₂-C₂₀-Alkenyl, C6-C12-Aryl oder -CO-C₁-C₁₈-Alkyl, R² ist H oder C₁-C₈-Alkyl, und R³ C₁-C₁₂-Alkyl; C₂-C₁₂-Alkenyl oder C₅-C₆-Cycloalkyl bedeutet und Z unabhängig voneinander jeweils ein unsubstituiertes oder einfach oder mehrfach mit C1-C6-Alkyl substituiertes Phenyl oder Biphenyl bedeutet,
   und
   die dritte Schicht (C) ein UV stabilisiertes Polycarbonat enthält und die vierte Schicht (D) ein gegebenenfalls UV stabilisiertes Polycarbonat enthält, wobei die Schicht B) und C) in Form einer koextrudierte Folie oder zweier laminierter Folien vorliegt.
   Hierbei nehmen die zweite und dritte Schicht (B und C) die Form einer koextrudierten Folie oder zweier laminierter Folien oder einer mit (B) beschichteten Polycarbonatfolie (C) an, die im nachfolgenden Schritt mit Schicht (D) bevorzugt durch Film Injection Molding (FIM) hinterspritzt und anschließend mit Schicht (A) versehen wird. Geeignete Methoden zum Aufbringen auf Schicht (A) sind Fluten, Tauchen, Sprühen, Aufwalzen oder Aufschleudern. Somit ist im Falle der Verwendung der koextrudierten Folie bzw. der laminierten Folien nur ein Beschichtungsschritt nötig.
   Gegenstand der vorliegenden Erfindung ist weiterhin ein Verfahren zur Herstellung eines mehrschichtigen Erzeugnisses umfassend eine erste Schicht (A), eine zweite Schicht (B), eine dritte Schicht (C) und eine vierte Schicht (D), wobei
   die erste Schicht (A) eine Kratzfestschutzschicht ist, die eine Extinktion von mindestens 0,3 bei 340 nm besitzt,
   die zweite Schicht (B) eine Alkylacrylat Schicht ist, die eine Extinktion von mindestens 2, bevorzugt >2,5 bei 340 nm besitzt und
   die dritte Schicht (C) ein UV stabilisiertes Polycarbonat enthält und die vierte Schicht (D) ein gegebenenfalls UV stabilisiertes Polycarbonat enthält,
   dadurch gekennzeichnet, dass die zweite und dritte Schicht (B und C) in Form einer koextrudierten Folie, zweier laminierter Folien oder einer mit Schicht (B) beschichteten Polycarbonatfolie bevorzugt mittels Film Injection Molding hinterspritzt und anschließend mit Schicht (A) durch beispielsweise Fluten, Tauchen, Sprühen, Aufwalzen oder Aufschleudern versehen wird.
Zusätzliche Schichten (E) und (F) können aufgetragen werden, wobei (E) vor Schicht (A) appliziert wird und anschließend (A) und (F) appliziert durch beispielsweise Fluten, Tauchen, Sprühen, Aufwalzen oder Aufschleudern und bevorzugt thermisch gehärtet werden.
Die Erfindung ist insofern überraschend, da der UV-Schutz, der über die Kratzfestschicht (A) und über die UV-Schutzschicht (B) gewährleistet wird, prinzipiell so ausreichend sein sollte, dass eine Schädigung des Polycarbonates, die zu der Vergilbung führt, nahezu ausgeschlossen wird. Hierzu wird in der Literatur eine Möglichkeit zur Berechnung des YI (Yellowness Indizes - Gelbwertes) beschrieben: Man bestimmt zunächst die wellenlängenabhängige Vergilbung des Materials nach der spektralen Empfindlichkeitsmethode (Interpretation of the spectral sensivity and of the action spectrum of polymers, P. Trubiroha, Tagungsband der XXII. Donauländergespräche, 17.8.2001, Berlin, Seite 4-1). Dann berechnet man die spektrale Verteilung des UV-Lichtes der Sonne hinter der UV-Schutzschicht. Aus diesen beiden Datensätzen lässt sich auf bekannte Weise durch eine Faltung und Aufintegration über die Zeit die Vergilbung nach Bewitterung berechnen. (Grundsätzliches zur Lebensdauervorhersage in der Bewitterung, A. Geburtig, V. Wachtendorf, Tagungsband 34. Jahrestagung der Gesellschaft für Umweltsimulation, Umwelteinflüsse erfassen, simulieren und bewerten, 2.3. 2005, Pfinztal, Seite 159).

Dieses mehrschichtige Erzeugnis ist Gegenstand der vorliegenden Erfindung.

Das erfindungsgemäße mehrschichtige Erzeugnis kann weitere Schichten umfassen, insbesondere eine weitere UV-Schutzschicht (E), die ebenfalls eine Schicht aus Alkylacrylat ist, die einen UV-Stabilisator enthält und die Form einer Folie oder einer gehärteten Lackschicht annehmen kann. Die Schichtabfolge beträgt in diesem Fall (A)-(B)-(C)-(D)-(E). Desweiteren kann auf (E) eine weitere Kratzschutzschicht (F) aufgetragen sein, wobei (A) und (F) die gleiche oder unterschiedliche Zusammensatzung enthalten können. Die Schichtabfolge beträgt in diesem Fall (A)-(B)-(C)-(D)-(E)-(F). Anstelle von (E) und (F) kann auch eine einzelne UV stabilisierte Kratzschutzschicht (G) aufgetragen sein. Die Schichtabfolge beträgt in diesem Fall (A)-(B)-(C)-(D)-(G). Schicht (E) bzw. (G) kann die in der vorliegenden Anmeldung genannten UV-Absorber enthalten.

Der in den Schichten (A) und gegebenenfalls (F) der erfindungsgemäßen mehrschichtigen Erzeugnisse verwendete UV-Absorber hat die allgemeine Formel (I) 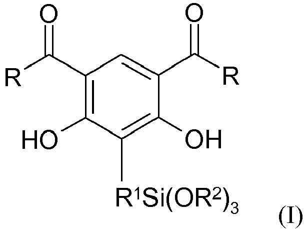 wobei R wahlweise ein substituierter oder unsubstituierter monozyklischer oder polyzyklischer aromatischer Rest, R¹ ein verzweigtes oder unverzweigtes C₁-C₁₀-Alkyl und R² ein verzweigtes oder unverzweigtes C₁-C₆-Alkyl darstellt. Bevorzugt wird 4,6-Dibenzoyl-2-(3-trialkoxysilylalklyl)-resorcinol besonders bevorzugt 4,6-Dibenzoyl-2-(3-triethoxysilylpropyl)resorcinol. (CAS No. 166255-23-8) verwendet. Solche silylierten Benzophenon UV-Absorber der allgemeinen Formel (I) sind prinzipiell bekannt aus US005391795, US005679820 und EP0339257.

Der bzw. die in den Schichten (B) und gegebenenfalls (E) der erfindungsgemäßen mehrschichtigen Erzeugnissen verwendeten UV-Absorber kann aus der Gruppe der UV-Absorber ausgewählt werden, die in Acrylaten verträglich sind und die eine Absorption im Bereich um 320 - 350 nm aufweisen und somit Polycarbonat schützen. Bekanntermaßen eignen sich besonders Benzotriazine und Triazole, da diese hohe Extinktionskoeffizienten und eine geringe Degradation in Acrylaten aufweisen (im Vergleich zu beispielsweise Benzophenon-Derivaten).

Bevorzugt werden Triazole der allgemeinen Formel (II) verwendet: 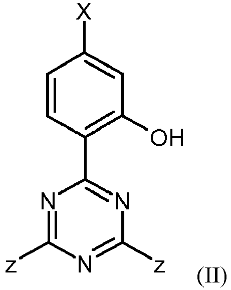 wobei
X OR¹ ; OCH₂CH₂OR¹; OCH₂CH(OH)CH₂OR¹ oder OCH(R²)COOR³ bedeutet, dabei steht,
R¹ für jeweils C₁-C₁₃-Alkyl, C₂-C₂₀-Alkenyl, C6-C12-Aryl oder -CO-C₁-C₁₈-Alkyl, R² ist H oder C₁-C₈-Alkyl, und R³ C₁-C₁₂-Alkyl; C₂-C₁₂-Alkenyl oder C₅-C₆-Cycloalkyl bedeutet und
Z unabhängig voneinander jeweils ein unsubstituiertes oder einfach oder mehrfach mit C1-C6-Alkyl, bevorzugt Methyl und/oder Ethyl, substituiertes Phenyl oder Biphenyl bedeutet, bevorzugt Phenyl, Methylphenyl, Dimethylphenyl, Trimethylphenyl oder Biphenyl bedeutet.

Die Kohlenwasserstoffketten von z.B. Alkyl oder Alkenyl können jeweils verzweigt oder unverzweigt sein.

Für UV-Schutzschichten (B) bzw. (E) in Form von Folien oder Koextrusionsschichten ist X bevorzugt OR¹; besonders bevorzugt mit R¹ = CH₂CH(CH₂CH₃)C₄H₉ und Z = Biphenyl.

Für UV-Schutzschichten (E) aus gehärteten Lackformulierungen ist X bevorzugt OCH(R²)COOR³; besonders bevorzugt mit R² = CH₃ und R³ = C₈H₁₇ und Z = Biphenyl.

Solche biphenylsubstituierten Triazine der allgemeinen Formel II sind aus WO 96/28431; DE-A 197 39 797; WO 00/66675; US-A 6225384; US 6255483; EP-A 1 308 084 und FR 2812299 prinzipiell bekannt.

Erfindungsgemäße UV-Schutzschichten (B) bzw. (E) in Form von Folien und Koextrusionsschichten enthalten als Polymermatrix ein Polyacrylat, enthaltend Alkylmethacrylat als Monomerbaustein, bevorzugt mit 1 bis 10 Kohlenwasserstoffatomen im Alkyl, besonders bevorzugt ist Methylmethacrylat. Insbesondere bevorzugt ist Polymethylmethacrylat.

In der vorliegenden Anmeldung sind die Begriffe Alkylacrylat, und Polyalkylacrylat Synonyme für Polyacrylat, wie es oben definiert ist. PMMA bedeutet Polymethylmethacrylat.

Da für einen dauerhaften UV-Schutz eine bestimmte Mindestextinktion der UV-Schutzschicht benötigt wird, hängt die erforderliche UV-Absorber Konzentration von der Schichtdicke ab.

Die erfindungsgemäßen Kratzfestschichten (A) bzw. (F) basieren auf Sol-Gel Siloxanlacken und besitzen bei Schichtdicken von 1 bis 20 µm, bevorzugt 2 bis 15 µm, besonders bevorzugt 4 bis 12 µm eine Extinktion zwischen 0,2 und 4, bevorzugt 0,2 und 2, besonders bevorzugt 0,3 ≤ Extinktion (Kratzfestschicht) ≤ 1 und enthalten einen UV-Absorber der Formel (I).

Die erfindungsgemäßen UV-Schutzschichten (B) bzw. (E) aus Koextrusionsschichten enthalten bei Schichtdicken von 1 bis 500 µm, bevorzugt 1 bis 100 µm, besonders bevorzugt 2 bis 50 µm 0,05 bis 20 Gew.-%, bevorzugt 0,1 bis 15 Gew.-%, besonders bevorzugt 0,5 bis 10 Gew.-% an UV-Absorber der Formel (II), wobei Koextrusionsschichten mit einer Schichtdicke von 2 µm mindestens 10 Gew.-%, bevorzugt ≥ 15 Gew.-%, solche von 10 µm mindestens 2 Gew.-%, bevorzugt ≥ 3 Gew.% und solche von 30 µm mindestens 0,7 Gew.-%, bevorzugt ≥ 1 Gew.% enthalten. Für die Extinktion der UV-Schutzschichten (B) gilt (jeweils bei 340 nm Wellenlänge) : 1 ≤ Extinktion (UV-Schutzschicht) ≤ 10, bevorzugt 2 ≤ Extinktion (UV-Schutzschicht) ≤ 9, besonders bevorzugt 3 ≤ Extinktion (UV-Schutzschicht) ≤ 8.

Die erfindungsgemäßen UV-Schutzschichten (B) bzw. (E) aus gehärteten Lackformulierungen enthalten bei Schichtdicken von 1 bis 100 µm, bevorzugt 1 bis 30 µm, besonders bevorzugt 1 bis 10 µm 0,5 bis 20 Gew.-%, bevorzugt 1 bis 15 Gew.-%, besonders bevorzugt 1,5 bis 10 Gew.-% bezogen auf den Feststoffgehalt der Lackformulierung an UV-Absorber der Formel (I), wobei Formulierungen mit Schichtdicken nach Applizieren und Härten von 1µm mindestens 10 Gew.-%, bevorzugt ≥15 Gew.%, solche von 5 µm mindestens 2 Gew.-% bevorzugt ≥3 Gew.% und solche von 10 µm mindestens 1 Gew.-% bevorzugt ≥1,5 Gew.% enthalten.

Die erfindungsgemäßen UV-Schutzschichten aus Folien enthalten bei Schichtdicken von 2 µm bis 2 mm, bevorzugt 50 µm bis 1 mm, besonders bevorzugt 80 µm bis 500 µm 0,01 bis 20 Gew.-%, bevorzugt 0,02 bis 5 Gew.-%, besonders bevorzugt 0,04 bis 2 Gew.-% an UV-Absorber der Formel (I), wobei Folien mit einer Schichtdicke von 80 µm mindestens 0,25 Gew.-%, bevorzugt ≥ 0,4 Gew.-%, solche von 200 µm mindestens 0,1 Gew.-%, bevorzugt ≥ 0,15 Gew.% und solche von 500 µm mindestens 0,04 Gew.-%, bevorzugt ≥ 0,06 Gew.% enthalten.

Die erfindungsgemäße Schicht (G) ist eine UV stabilisierte Kratzschutzschicht, besonders bevorzugt ein Hybridlack. Geeignete Methoden zum Aufbringen auf Schicht (A) sind beispielsweise Fluten, Tauchen, Sprühen, Aufwalzen oder Aufschleudern. Die Aushärtung kann sowohl thermisch als auch durch UV-Strahlung erfolgen. Ein möglicher thermisch härtbarer Hybridlack ist PHC587 (Momentive Performance Materials) siehe auch EP-A 0 570 165.

UV härtbare Hybridlacke sind beispielsweise UV-härtbare Acrylatlacke oder UV-härtbare wasserfreie hydrolisierbare Silan-Systeme, wie sie in WO 2008/071363 A oder DE-A 2804283 beschrieben werden. Ein kommerziell erhältliches System ist der UVHC3000 (Momentive Performance Materials).

Geeignete Polycarbonate für die dritte und vierte Schicht (C) und (D) der erfindungsgemäßen mehrschichtigen Erzeugnisse sind alle bekannten Polycarbonate, dies können Homopolycarbonate, Copolycarbonate und thermoplastische Polyestercarbonate sein.

Sie haben bevorzugt mittlere Molekulargewichte M̅_{w} von 18.000 bis 40.000, vorzugsweise von 22.000 bis 36.000 und insbesondere von 24.000 bis 33.000, ermittelt durch Messung der relativen Lösungsviskosität in Dichlormethan oder in Mischungen gleicher Gewichtsmengen Phenol/o-Dichlorbenzol geeicht durch Lichtstreuung.

Hierbei muss die dritte Schicht (C) ebenfalls UV-Absorber enthalten, wohingegen (D) UVstabilisiert sein kann, aber nicht muß. Als UV-Absorber können alle gängigen UV-Absorber für Polycarbonat gewählt werden, wie beispielweise Tinuvin® 234 (2-[2-Hydroxy-3,5-bis(**α**,**α-**dimethylbenzyl)phenyl]benzotriazol, CAS No. 70321-86-7), Tinuvin® 326 (2-(2-Hydroxy-3-tert-butyl-5-methylphenyl)-5-chlorobenzotriazol, CAS No. 3896-11-5), Tinuvin® 329 (2-(2-Hydroxy-5-tert-octylphenyl)benzotriazol, CAS No. 3147-75-9), Tinuvin® 350(2-(2H-benzotriazol-2-yl)-4-(1,1-dimethylethyl)-6-(2-methylpropyl)-phenol, CAS No. 134440-54-3), Tinuvin® 360 (2,2'-Methylenbis(6-(2H-benzotriazol-2-yl)-4-(1,1,3,3-tetramethylbutyl)phenol), CAS No. 103597-45-1) oder Tinuvin® 1577 (2,4-Diphenyl-6-(2-hydroxy-4-hexyloxyphenyl)-s-triazin, CAS No. 147315-50-2) von Ciba Speciality Chemicals. Die UV-geschützten Polycarbonatschichten enthalten 0,1 bis 3 Gew.%, bevorzugt 0,1 bis 1,5 Gew.%, besonders bevorzugt 0,2 bis 0,5 Gew.% UV-Absorber.

Zur Herstellung von Polycarbonaten sei beispielhaft auf "Schnell, Chemistry and Physics of Polycarbonats, Polymer Reviews, Vol. 9, Interscience Publishers, New York, London, Sydney 1964", und auf "D.C. PREVORSEK, B.T. DEBONA and Y. KESTEN, Corporate Research Center, Allied Chemical Corporation, Moristown, New Jersey 07960, 'Synthesis of Poly(ester)carbonate Copolymers' in Journal of Polymer Science, Polymer Chemistry Edition, Vol. 19, 75-90 (1980)", und auf "D. Freitag, U. Grigo, P.R. Müller, N. Nouvertne, BAYER AG, 'Polycarbonates' in Encyclopedia of Polymer Science and Engineering, Vol. 11, Second Edition, 1988, Seiten 648-718" und schließlich auf "Dres. U. Grigo, K. Kircher und P.R. Müller 'Polycarbonate' in Becker/Braun, Kunststoff-Handbuch, Band 3/1, Polycarbonate, Polyacetale, Polyester, Celluloseester, Carl Hanser Verlag München, Wien 1992, Seiten 117-299" verwiesen.

Die Herstellung der Polycarbonate erfolgt vorzugsweise nach dem Phasengrenzflächenverfahren oder dem Schmelze-Umesterungsverfahren und wird im Folgenden beispielhaft an dem Phasengrenzflächenverfahren beschrieben.

Als Ausgangsverbindungen bevorzugt einzusetzende Verbindungen sind Bisphenole der allgemeinen Formel

HO-R-OH,

worin R ein divalenter organischer Rest mit 6 bis 30 Kohlenstoffatomen ist, der eine oder mehrere aromatische Gruppen enthält.

Beispiele solcher Verbindungen sind Bisphenole, die zu der Gruppe der Dihydroxydiphenyle, Bis(hydroxyphenyl)alkane, Indanbisphenole, Bis(hydroxyphenyl)ether, Bis(hydroxyphenyl)sulfone, Bis(hydroxyphenyl)ketone und α,α'-Bis(hydroxyphenyl)- diisopropylbenzole gehören.

Besonders bevorzugte Bisphenole, die zu den vorgenannten Verbindungsgruppen gehören, sind Bisphenol-A, Tetraalkylbisphenol-A, 4,4-(meta-Phenylendiisopropyl) diphenol (Bisphenol M), 4,4-(para-Phenylendiisopropyl) diphenol, 1,1-Bis-(4-hydroxyphenyl)-3,3,5-trimethylcyclohexan (BP-TMC) sowie gegebenenfalls deren Gemische.

Bevorzugt werden die erfindungsgemäß einzusetzenden Bisphenolverbindungen mit Kohlensäureverbindungen, insbesondere Phosgen, oder beim Schmelzeumesterungsprozess mit Diphenylcarbonat bzw. Dimethylcarbonat, umgesetzt.

Polyestercarbonate werden bevorzugt durch Umsetzung der bereits genannten Bisphenole, mindestens einer aromatischen Dicarbonsäure und gegebenenfalls Kohlensäureäquivalente erhalten. Geeignete aromatische Dicarbonsäuren sind beispielsweise Phthalsäure, Terephthalsäure, Isophthalsäure, 3,3'- oder 4,4'-Diphenyldicarbonsäure und Benzophenondicarbonsäuren. Ein Teil, bis zu 80 Mol.-%, vorzugsweise von 20 bis 50 Mol-% der Carbonatgruppen in den Polycarbonaten können durch aromatische Dicarbonsäureester-Gruppen ersetzt sein.

Beim Phasengrenzflächenverfahren verwendete inerte organische Lösungsmittel sind beispielsweise Dichlormethan, die verschiedenen Dichlorethane und Chlorpropanverbindungen, Tetrachlormethan, Trichlormethan, Chlorbenzol und Chlortoluol, vorzugsweise werden Chlorbenzol oder Dichlormethan bzw. Gemische aus Dichlormethan und Chlorbenzol eingesetzt.

Die Phasengrenzflächenreaktion kann durch Katalysatoren wie tertiäre Amine, insbesondere N-Alkylpiperidine oder Oniumsalze beschleunigt werden. Bevorzugt werden Tributylamin, Triethylamin und N-Ethylpiperidin verwendet. Im Falle des Schmelzeumesterungsprozesses werden bevorzugt die in DE-A 4 238 123 genannten Katalysatoren verwendet.

Die Polycarbonate können durch den Einsatz geringer Mengen Verzweiger bewusst und kontrolliert verzweigt werden. Einige geeignete Verzweiger sind: Phloroglucin, 4,6-Dimethyl-2,4,6-tri-(4-hydroxyphenyl)-hepten-2; 4,6-Dimethyl-2,4,6-tri-(4-hydroxyphenyl)-heptan; 1,3,5-Tri-(4-hydroxyphenyl)-benzol; 1,1,1-Tri-(4-hydroxyphenyl)-ethan; Tri-(4-hydroxyphenyl)-phenylmethan; 2,2-Bis-[4,4-bis-(4-hydroxyphenyl)-cyclohexyl]-propan; 2,4-Bis-(4-hydroxyphenyl-isopropyl)-phenol; 2,6-Bis-(2-hydroxy-5'-methyl-benzyl)-4-methylphenol; 2-(4-Hydroxyphenyl)-2-(2,4-dihydroxyphenyl)-propan; Hexa-(4-(4-hydroxyphenyl-isopropyl)-phenyl)-orthoterephthalsäureester; Tetra-(4-hydroxyphenyl)-methan; Tetra-(4-(4-hydroxyphenyl-isopropyl)-phenoxy)-methan; α,α,'α"-Tris-(4-hydroxyphenyl)-1,3,5-triisopropylbenzol; 2,4-Dihydroxybenzoesäure; Trimesinsäure; Cyanurchlorid; 3,3-Bis-(3-methyl-4-hydroxyphenyl)-2-oxo-2,3-dihydroindol; 1,4-Bis-(4',4"-dihydroxytriphenyl)-methyl)-benzol und insbesondere: 1,1,1-Tri-(4-hydroxyphenyl)-ethan und Bis-(3-methyl-4-hydroxyphenyl)-2-oxo-2,3-dihydroindol.

Die gegebenenfalls mitzuverwendenden 0,05 bis 2 Mol-%, bezogen auf eingesetzte Diphenole, an Verzweigern bzw. Mischungen der Verzweigern, können mit den Diphenolen zusammen eingesetzt werden aber auch in einem späteren Stadium der Synthese zugegeben werden.

Als Kettenabbrecher werden bevorzugt Phenole wie Phenol, Alkylphenole wie Kresol und 4-tert.-Butylphenol, Chlorphenol, Bromphenol, Cumylphenol oder deren Mischungen verwendet in Mengen von 1 - 20 Mol-%, bevorzugt 2 - 10 Mol-% je Mol Bisphenol. Bevorzugt sind Phenol, 4-tert.-Butylphenol bzw. Cumylphenol.

Kettenabbrecher und Verzweiger können getrennt oder aber auch zusammen mit dem Bisphenol den Synthesen zugesetzt werden.

Die Herstellung der Polycarbonate nach dem Schmelzeumesterungsprozess ist in DE-A 4238 123 beispielhaft beschrieben.

Erfindungsgemäß bevorzugte Polycarbonate für die zweite Schicht des erfindungsgemäßen mehrschichtigen Erzeugnisses sind das Homopolycarbonat auf Basis von Bisphenol A, das Homopolycarbonat auf Basis von 1,1-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Das Homopolycarbonat auf Basis von Bisphenol A ist besonders bevorzugt.

Das Polycarbonat kann Stabilisatoren enthalten. Geeignete Stabilisatoren sind beispielsweise Phosphine, Phosphite oder Si enthaltende Stabilisatoren und weitere in EP-A 0 500 496 beschriebene Verbindungen. Beispielhaft seien Triphenylphosphite, Diphenylalkylphosphite, Phenyldialkylphosphite, Tris-(nonylphenyl)phosphit, Tetrakis-(2,4-di-tert. -butylphenyl)-4,4' -biphenylendiphosponit und Triarylphosphit genannt. Besonders bevorzugt sind Triphenylphosphin und Tris-(2,4-di-tert.-butylphenyl)phosphit.

Ferner kann die Polycarbonat enthaltende zweite Schicht (B) des erfindungsgemäßen mehrschichtigen Erzeugnisses 0,01 bis 0,5 Gew.-% der Ester oder Teilester von ein- bis sechswertigen Alkoholen, insbesondere des Glycerins, des Pentaerythrits oder von Guerbetalkoholen enthalten.

Einwertige Alkohole sind beispielsweise Stearylalkohol, Palmitylalkohol und Guerbetalkohole.

Ein zweiwertiger Alkohol ist beispielsweise Glycol.

Ein dreiwertiger Alkohol ist beispielsweise Glycerin.

Vierwertige Alkohole sind beispielsweise Pentaerythrit und Mesoerythrit.

Fünfwertige Alkohole sind beispielsweise Arabit, Ribit und Xylit.

Sechswertige Alkohole sind beispielsweise Mannit, Glucit (Sorbit) und Dulcit.

Die Ester sind bevorzugt die Monoester, Diester, Triester, Tetraester, Pentaester und Hexaester oder deren Mischungen, insbesondere statistische Mischungen, aus gesättigten, aliphatischen C₁₀ bis C₃₆-Monocarbonsäuren und gegebenenfalls Hydroxy-Monocarbonsäuren, vorzugsweise mit gesättigten, aliphatischen C₁₄ bis C₃₂-Monocarbonsäuren und gegebenenfalls Hydroxy-Monocarbonsäuren.

Die kommerziell erhältlichen Fettsäureester, insbesondere des Pentaerythrits und des Glycerins, können herstellungsbedingt <60 % unterschiedlicher Teilester enthalten.

Gesättigte, aliphatische Monocarbonsäuren mit 10 bis 36 C-Atomen sind beispielsweise Caprinsäure, Laurinsäure, Myristinsäure, Palmitinsäure, Stearinsäure, Hydroxystearinsäure, Arachinsäure, Behensäure, Lignocerinsäure, Cerotinsäure und Montansäuren.

Bevorzugte gesättigte, aliphatische Monocarbonsäuren mit 14 bis 22 C-Atomen sind beispielsweise Myristinsäure, Palmitinsäure, Stearinsäure, Hydroxystearinsäure, Arachinsäure und Behensäure.

Besonders bevorzugt sind gesättigte, aliphatische Monocarbonsäuren wie Palmitinsäure, Stearinsäure und Hydroxystearinsäure.

Die gesättigten, aliphatischen C₁₀ bis C₃₆-Carbonsäuren und die Fettsäureester sind als solche entweder literaturbekannt oder nach literaturbekannten Verfahren herstellbar. Beispiele für Pentaerythritfettsäureester sind die der besonders bevorzugten, vorstehend genannten Monocarbonsäuren.

Besonders bevorzugt sind Ester des Pentaerythrits und des Glycerins mit Stearinsäure und Palmitinsäure.

Besonders bevorzugt sind auch Ester von Guerbetalkoholen und des Glycerins mit Stearinsäure und Palmitinsäure und gegebenenfalls Hydroxystearinsäure.

Die erfindungsgemäßen mehrschichtigen Erzeugnisse können organische Farbstoffe, anorganische Farbpigmente, Fluoreszenzfarbstoffe, IR-Absorber und besonders bevorzugt optische Aufheller enthalten.

Das erfindungsgemäße Mehrschichtsystem wird wie folgt hergestellt: Ein Compound (a) aus (a1) einem Polyacrylat, und (a2) einem UV-Absorber, besonders bevorzugt einem biphenylsubstituierten Triazin der allgemeinen Formel (II) wird mit UV-geschütztem Polycarbonat in der Weise koextrudiert, dass sich eine dünne UV-Schutzschicht aus Compound (a) gut haftend auf der Polycarbonatoberfläche befindet, die eine Extinktion von mindestens 2,5 besitzt. Danach wird die Koexfolie auf der Polycarbonatseite mit Polycarbonat zu einem gut haftenden Verbund hinterspritzt oder laminiert. Schließlich wird die Kratzfestschicht (A), die ebenfalls UV-Absorber enthält, mittels Fluten, Tauchen, Sprühen, Aufwalzen oder Aufschleudern auf die Oberfläche des Polycarbonatformteils auf die UV-Schutzschicht (B) aufgebracht und anschließend physikalisch getrocknet, so dass sich eine gut haftende Beschichtung auf der Alkylacrylat-Schicht ergibt. Die Extinktion dieser Schicht (A) soll mindestens 0,3 betragen.

Wahlweise kann auch vor dem Aufbringen der Kratzschutzschicht (A) erst auf der Polycarbonat-Seite des Polycarbonatformteils eine weitere UV-Schutzschicht (E) aufgetragen werden, bestehend aus (b2) einem biphenylsubstituierten Triazin der allgemeinen Formel (II) in einer Lackformulierung (b) enthaltend (b1) ein Polyacrylatharz, enthaltend Methylmethacrylat als Hauptmomomerbaustein und eventuell ein weiteres Alkylmethacrylat mit längerer, linearer oder verzeigter Alkylkette (-CₙH₂ₙ₊₁ mit n>1), bevorzugt 1 ≤ n ≤ 10, besonders bevorzugt linear mit n = 3 (Butylmethacrylat), und einem oder mehreren Lösemitteln, sowie eventuell weiteren Lackadditiven wie beispielsweise Füllstoffe, Verlaufmittel, Radikalfänger usw.. Diese UV-Absorber-haltige Lackformulierung (b) wird mittels Fluten, Tauchen, Sprühen, Aufwalzen oder Aufschleudern auf die Oberfläche eines Polycarbonatformteils aufgebracht und anschließend physikalisch getrocknet, so dass sich eine gut haftende Beschichtung auf PC ergibt. Schließlich erfolgt das Aufbringen der Kratzschutzschicht (A), die nun auf beiden Seiten des Formteils auf bereits beschriebene Weise appliziert wird.

Das Verhältnis der beiden Methacrylatmonomereinheiten beträgt bevorzugt 75 bis 100% Methylmethacrylat bzw. 25 bis 0% Alkylmethacrylat, bevorzugt 85 bis 100% Methylmethacrylat bzw. 15% bis 0% Alkylmethacrylat, besonders bevorzugt 90 bis 100% Methylmethacrylat und 10% bis 0% Alkylmethacrylat (Angabe in Gew.-%).

Lackformulierungen gemäß (b) und Beschichtung der Substrate mit der UV-Schutz-Lackformulierung sind beispielsweise und bevorzugt in WO 2006/108520 A beschrieben.

Die Kratzfestschicht wird in Form eines kratzfesten bzw. abriebsbeständigen Lackes beispielsweise aber nicht ausschließlich ein Polysiloxanlack bzw. Sol-Gel-Lack-, eine Silikatbeschichtung (Wasserglas), oder auch eine nanopartikelhaltige Formulierung (Hybridlack) durch Fluten, Tauchen, Sprühen, Aufwalzen oder Aufschleudern auf die Oberfläche der UV-Schutzschicht aufgebracht und anschließend zu einem gut haftenden Verbund PC / UV-Schutz-Schicht / Kratzfest-Schicht ausgehärtet

Sol-Gel-Lacke im Sinne der vorliegenden Erfindung sind Lacke, die nach dem Sol-Gel-Prozess hergestellt werden. Der Sol-Gel-Prozess ist ein Verfahren zur Synthese nichtmetallischer anorganischer oder hybridpolymerer Materialien aus kolloidalen Dispersionen, den sogenannten Solen.
Beispielsweise können solche Sol-Gel Beschichtungslösungen durch Hydrolyse wässriger Dispersionen von kolloidem Siliziumdioxid und einem Organoalkoxysilan oder Mischungen aus Organoalkoxysilanen der allgemeinen Formel RSi(OR')₃ herstellt werden, wobei in den Organoalkoxysilan(en) der allgemeinen Formel RSi(OR')₃ R für einen monovalenten C1 bis C6 - Alkyl-Rest oder für einen ganz oder teilweise fluorierten C1 - C6 - Alkylrest, für eine Vinyl- oder eine Allyl-Einheit, einen Arylrest oder für ein C1 - C6 Alkoxygruppe steht. Besonders bevorzugt ist R eine C1 bis C4-Alkylgruppe, eine Methyl-, Ethyl-, n-Propyl-, iso-Propyl-, tert.-Butyl-, sek.-Butyl- oder n-Butylgruppe, eine Vinyl-, Allyl-, Phenyl- oder substituierte Phenyleinheit. Die -OR' sind unabhängig voneinander ausgewählt aus der Gruppe enthaltend C1 bis C6 - Alkoxygruppen, eine Hydroxygruppe, eine Formyleinheit und eine Acetyl-Einheit.
Das kolloide Siliziumdioxid ist beispielsweise als z.B. Levasil 200 A (HC Starck), Nalco 1034A (Nalco Chemical Co), Ludox AS-40 oder Ludox LS (GRACE Davison) erhältlich. Als Organoalkoxysilane seien beispielhaft folgende Verbindungen genannt: 3,3,3-Trifluoropropytrimethoxysilan, Methyltrimethoxysilan, Methyltrihydroxysilan, Methyltriethoxysilan, Ethyltrimethoxysilan, Methyltriacetoxysilan, Ethyltriethoxysilan, Phenyltrialkoxysilan (z.B. Phenyltriethoxysilan und Phenyltrimethoxysilan) und Mischungen daraus.

Als Katalysatoren können beispielsweise organische und/oder anorganische Säuren oder Basen verwendet werden.

In einer Ausführungsform können die kolloiden Siliziumdioxidpartikel auch durch Vorkondensation ausgehend von Alkoxysilanen in situ gebildet werden (siehe hierzu "The Chemistry of Silica", Ralph K. Iler, John Wiley & Sons, (1979), p. 312-461.

Die Hydrolyse der Sol-Gel-Lösung wird durch Zugabe von Lösungsmitteln, bevorzugt alkoholischen Lösungsmitteln wie z.B. Isopropanol, n-Butanol, Isobutanol oder Mischungen daraus, abgebrochen bzw. stark verlangsamt. Anschließend werden ein bzw. mehrere erfindungsgemäße UV-Absorber, die optional in einem Lösungsmittel vorgelöst sind, zu der Sol-Gel Beschichtungslösung gegeben, wonach ein Alterungsschritt von wenigen Stunden oder mehreren Tagen/Wochen eintritt. Des weiteren können noch weitere Additive und/oder Stabilisatoren wie beispielsweise Verlaufsmittel, Oberflächenadditive, Verdickungsmittel, Pigmente, Farbstoffe, Härtungskatalysatoren, IR-Absorber, UV-Absorber und/oder Haftvermittler zugesetzt werden. Auch die Verwendung von Hexamethyldisilazan oder vergleichbaren Verbindungen, die zu einer reduzierten Rissanfälligkeit der Beschichtungen führen können, ist möglich (vgl. auch WO 2008/109072 A).

Als Kratzfestlack ist beispielsweise und bevorzugt AS4700 von Momentive Performance Materials (ein UV-absorberhaltiger, polysiloxanbasierter Decklack).

Hybridlacke im Sinne der vorliegenden Erfindung basieren auf der Verwendung von Hybridpolymeren als Bindemittel. Hybridpolymere (Hybride: lat. "von zweierlei Herkunft") sind polymere Werkstoffe, die Struktureinheiten verschiedener Materialklassen auf molekularer Ebene in sich vereinen. Durch ihren Aufbau können Hybridpolymere völlig neuartigen Eigenschaftskombinationen aufweisen. Im Unterschied zu Verbundwerkstoffen (definierte Phasengrenzen, schwache Wechselwirkungen zwischen den Phasen) und Nanokompositen (Verwendung nanoskaliger Füllstoffe) sind die Struktureinheiten von Hybridpolymeren auf molekularer Ebene miteinander verknüpft. Dies gelingt durch chemische Verfahren wie z. B. den Sol-Gel-Prozess, mit dem anorganische Netzwerke aufgebaut werden können. Durch den Einsatz von organisch reaktiven Precursoren z. B. organisch modifizierten Metall-Alkoxiden können zusätzlich organische Oligomer/Polymerstrukturen erzeugt werden. Oberflächenmodifizierte Nanopartikel enthaltende Acrylatlacke, die nach der Härtung ein organisch/anorganisches Netzwerk bilden, werden ebenfalls als Hybridlack definiert.

Erfindungsgemäß sind diejenigen mehrschichtigen Erzeugnisse bevorzugt, die ausgewählt sind aus der Gruppe bestehend aus Platten, Folien und dreidimensionalen Formteilen.

Ebenfalls Gegenstand der vorliegenden Erfindung ist die Verwendung besagter mehrschichtiger Erzeugnisse insbesondere für Außenanwendungen mit dauerhaft hohen Anforderungen hinsichtlich des visuellen Eindrucks, wie beispielsweise der Verscheibung.

Die Erfindung wird durch die folgenden Beispiele weiter erläutert ohne auf diese beschränkt zu sein. Die erfindungsgemäßen Beispiele geben lediglich bevorzugte Ausführungsformen der vor-liegenden Erfindung wieder.

### Beispiel 1:

Coextrudierte Folien mit dem Aufbau Bisphenol A Polycarbonat (Typ Makrolon 3108 (hochviskoses BPA-PC (MFR 6,5 g/10min nach ISO 1133 bei 300°C und 1,2 kg) ohne UV-Stabilisierung)) / UV-Schutz-Coexschicht aus CGX UVA 006 der Firma Ciba Specialty Chemicals (biphenylsubstituiertes Triazin der Formel II mit X=OCH2CH(CH2CH3)C4H9) in einer PMMA-Matrix aus Plexiglas 8H (PMMA mit einem Mw von 103,5 kg/mol bestimmt über GPC kalibriert auf PS) der Firma Röhm GmbH & Co. KG - auf PC-Seite mit Makrolon AL2647 (Bayer MaterialScience AG; mittelviskoses Bisphenol A-Polycarbonat, MVR 12.5 cm³/10 min nach ISO 1133 bei 300°C und 1,2kg, mit UV-Stabilisierung, leicht entformbar) hinterspritzt und auf der PMMA-Seite mit Kratzfestlack AS4700 von Momentive Performance Materials beschichtet.

### Herstellung des UV-Schutz-Compounds:

14,25 kg bei 100°C 3 h vorgetrocknetes Plexiglas 8H wurden zu Gries gemahlen (Korngröße ca. 700 µm) und mit 750 g des UV-Absorbers CGX UVA 006 (95%ig, entspricht 5 Gew.-%) vermengt und auf einem Zweischneckenextruder (ZSK 32/3) bei einer Drehzahl von 150 min⁻¹ zu Granulat verarbeitet. Die Massentemperatur betrug 260°C und das erhaltene Granulat war klar und transparent.

### Herstellung der Coexfolie:

Bei der Herstellung der einseitigen Coexfolie wurde das Basismaterial Makrolon 3108 nach Vortrocknung (4h bei 120°C) auf dem Haupextruder (Drehzahl 65,7 min⁻¹, Massetemperatur 296°C und Massedruck 99 bar) aufgeschmolzen. Von der anderen Seite wurde das Coexmaterial bestehend aus dem bei 100°C 3h vorgetrocknetem UV-Schutz-Compound (siehe oben) über einen Coextruder (Drehzahl 10 min⁻¹, Massetemperatur 286°C und Massedruck 54 bar) zugeführt und gemeinsam mit dem Basismaterial über eine Plattendüse auf ein Walzwerk übertragen. Die so erhaltene Coexfolie hatte eine Basismaterialdicke von etwa 175 µm und eine UV-Coexschutzschicht von etwa 13 µm.

### Herstellung der Coexfolien enthaltenden Platte:

Diese wird auf der Polycarbonat-Seite hinterspritzt mit Makrolon AL2647 (Bayer MaterialScience AG; mittelviskoses Bisphenol A-Polycarbonat, MVR 12.5 cm³/10 min nach ISO 1133 bei 300°C und 1,2kg, mit UV-Stabilisierung, leicht entformbar).

### Aufbringen des Kratzfestlackes

Anschließend wurde der Kratzschutzlack AS4700 der Firma Momentive Performance Materials auf die PMMA-Seite der coextrudierten Folie im Flutverfahren aufgebracht, abgelüftet und danach für 60 min bei 120°C in einem Umlufttrockenschrank gehärtet.

Die Anfangsextinktion der Coexschicht beträgt bei 340 nm 3,3.

### Beispiel 2:

Vergleichbeispiel analog Beispiel 1, aber unter Verwendung des Kratzschutzlackes SHC5020 von Momentive Performance Materials, der keinen UV-Schutz beinhaltet.

### Beispiel 3:

Analog Beispiel 1, aber unter Verwendung eines UV-geschützten Bisphenol A Polycarbonat (Typ Makrolon 3108 (hochviskoses BPA-PC (MFR 6,5 g/10min nach ISO 1133 bei 300°C und 1,2 kg) mit 0,3% Tinuvin 360 (2,2'-Methylenbis(6-(2H-benzotriazol-2-yl)-4-1,1,3,3-tetramethylbutyl)phenol - CAS No. 103597-45-1)) als Bestandteil der coextrudierten Folie.

### Beispiel 4:

Analog Beispiel 3, aber unter Verwendung eines Rückseitenschutzes (3,2 mm Platte Makrolon AL2647 (Bayer MaterialScience AG; mittelviskoses Bisphenol A-Polycarbonat, MVR 12.5 cm³/10 min nach ISO 1133 bei 300°C und 1,2kg, mit UV-Stabilisierung, leicht entformbar) in der Bewitterung zur Verhinderung der Rückseitenschädigung durch Streustrahlung im Bewitterungsgerät. Für die Messungen des Gelbwertes wird der Rückseitenschutz entfernt.

**Tabelle:**

| **Beispiel** | **1** | **2** | **3** | **4** |
|---|---|---|---|---|
| YI (0h) | 1,07 | 0,70 | 1,22 | 1,20 |
| YI (7000h) | 4,12 | 8,13 | 3,54 | 2,48 |
| Δ YI | 3,05 | 7,43 | 2,32 | 1,28 |
| Kratzschutzlack | 5,7 µm | 4,8 µm | 5,5 µm | 5,6 µm |
| Extinktion Kratzschutzschicht | 0,44 | (kein UV-Schutz enthalten) | 0,43 | 0,43 |
| SD PMMA | 13,5 µm | 13,3 µm | 13,2 µm | 13,1 µm |
| SD PC (UV geschützt) | - | - | 157 µm | 157 µm |
| Extinktion Folie | 4,7 | 4,6 | 5,3 | 5,3 |
| Rückseite | ungeschützt | ungeschützt | ungeschützt | geschützt |
| | Vergleich | Vergleich | erfindungsgemäß | erfindungsgemäß |

### Extinktionswerte:

| | Kratzfestlack | PMMA (mit CGX) | PC (mit Tinuvin 360) |
|---|---|---|---|
| Schichtdicke am Meßpunkt | 7,5 µm | 8 µm | 230 µm |
| Extinktion am Meßpunkt (bei 340 nm) | 0,58 | 2,78 | 1,06 |
| Extinktion (bei 340 nm) / µm | 0,077 | 0,35 | 0,0046 |

Die Bestimmung der Extinktionswerte der jeweiligen Schicht erfolgte für die Kratzfestschicht (A) auf Quarz, für die UV-Schutzschicht (B) anhand einer Coexfolie ohne UV-Schutz im Polycarbonat (C) und für die UV-geschützte Polycarbonatschicht (C) an einer Coexfolie ohne UV-Schutz in der UV-Schutzschicht (B). Gemessen wurde die Transmission der Proben an einem PELambda900 (Photometerkugel 0°/diffus / Methode : MM50002). Anschließend wurde die Extinktion bei 340 nm berechnet und nach dem Lambert-Beerschen Gesetz für die jeweiligen Schichtdicken angegeben.

### Untersuchung der Haftung des Mehrschichtsystems basierend auf dem PC-Substrat:

Es wurden folgende Haftungstests a.) Klebebandabriss (verwendetes Klebeband 3M 898) ohne und mit Gitterschnitt (analog zu ISO 2409 bzw. ASTM D 3359); b.) Klebebandabriss nach 4 h Lagerung in kochendem Wasser; c.) Klebebandabriss nach 10 Tagen Lagerung in ca. 65°C warmem Wasser (analog ISO 2812-2 und ASTM 870-02) durchgeführt und alle bestanden, d.h. es kam zu keinerlei Abriss der Beschichtung bzw. einer Schicht des Schichtverbundes (Bewertung 0 gemäß ISO 2409 bzw. 5B gemäß ASTM D 3359).

### Untersuchung des Mehrschichtverbundes nach 7000h Bewitterung bei 0,75 W/m²/nm bei 340 nm:

Bewittert wurde in einem Ci5000 der Firma Atlas bei einer Strahlungstärke von 0,75 W/m²/nm bei 340 nm in einem 102:18 Trocken/Naß-Zyklus. Als Filter wurden boro/boro (Daylight-Filterung) gewählt, Schwarztafel-Temperatur war 70 (±2) °C und die Probenraumtemperatur betrug 55 (±2) °C (Trockenzylus) angelehnt an die ASTM G 155.

## Patentansprüche

1. Ein mehrschichtiges Erzeugnis umfassend eine erste Schicht (A), eine zweite Schicht (B), eine dritte Schicht (C) und eine vierte Schicht (D), wobei
die erste Schicht (A) eine Kratzfestschutzschicht ist, die eine Extinktion von mindestens 0,2 bei 340 nm besitzt, enthaltend einen UV-Absorber der Formel (I) 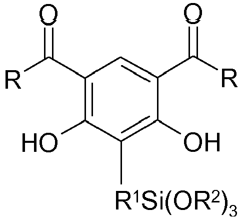 wobei R ein substituierter oder unsubstituierter monozyklischer oder polyzyklischer aromatischer Rest, R¹ ein verzweigtes oder unverzweigtes C₁-C₁₀-Alkyl und R² ein verzweigtes oder unverzweigtes C₁-C₆-Alkyl bedeuten,
die zweite Schicht (B) eine Polyacrylat Schicht ist, die Alkylmethacrylat als Monomerbaustein enthält und die eine Extinktion von mindestens 2 bei 340 nm besitzt, enthaltend einen UV-Absorber der Formel (II) 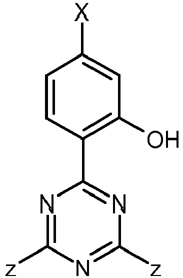 wobei
X OR¹ ; OCH₂CH₂OR¹; OCH₂CH(OH)CH₂OR¹ oder OCH(R²)COOR³ bedeutet, dabei steht,
R¹ für jeweils C₁-C₁₃-Alkyl, C₂-C₂₀-Alkenyl, C6-C12-Aryl oder -CO-C₁-C₁₈-Alkyl, R² ist H oder C₁-C₈-Alkyl, und R³ C₁-C₁₂-Alkyl; C₂-C₁₂-Alkenyl oder C₅-C₆-Cycloalkyl bedeutet und
Z unabhängig voneinander jeweils ein unsubstituiertes oder einfach oder mehrfach mit C1-C6-Alkyl substituiertes Phenyl oder Biphenyl bedeutet,
und
die dritte Schicht (C) ein UV stabilisiertes Polycarbonat enthält und die vierte Schicht (D) ein gegebenenfalls UV stabilisiertes Polycarbonat enthält,
wobei die Schicht B) und C) in Form einer koextrudierte Folie oder zweier laminierter Folien vorliegt.

2. Mehrschichtiges Erzeugnis gemäß Anspruch 1, wobei Schicht (A) eine Extinktion von mindestens 0,3 bei 340 nm aufweist.

3. Mehrschichtiges Erzeugnis gemäß Anspruch 1, wobei Schicht (A) auf Sol-Gel-Siloxanlacken basiert und eine Extinktion zwischen 0,2 und 4 bei 340 nm aufweist.

4. Mehrschichtiges Erzeugnis gemäß Anspruch 1, wobei Schicht (B) eine Extinktion von 2 bis 9 bei 340 nm aufweist.

5. Mehrschichtiges Erzeugnis gemäß Anspruch 1, wobei der UV-Absorber der Formel (I) ausgewählt ist aus 4,6-Dibenzoyl-2-(3-trialkoxysilylalklyl)- resorcinol und 4,6-Dibenzoyl-2-(3-triethoxysilylpropyl) resorcinol.

6. Mehrschichtiges Erzeugnis gemäß Anspruch 1, wobei in Formel (II) X für OR¹ steht,
R¹ für CH₂CH(CH₂CH₃)C₄H₉ und
Z für Biphenyl steht.

7. Mehrschichtiges Erzeugnis gemäß Anspruch 1, wobei mindestens eine zusätzliche Schicht ausgewählt aus (E) und (F) oder eine Schicht (G) enthalten ist, wobei (E) eine weitere UV-Schutzschicht auf Basis von Alkylacrylat enthaltend einen UV-Stabilisator, (F) eine KratzSchutzschicht ist und (G) eine UV stabilisierte Kratzschutzschicht ist.

8. Mehrschichtiges Erzeugnis gemäß Anspruch 7, wobei Schicht (E) einen UV-Absorber der Formel II enthält, 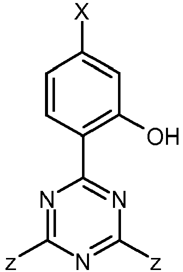 wobei
X OCH(R²)COOR³
R²= CH₃ und R⁸ = C₈H₁₇ und Z Biphenyl bedeutet.

9. Verfahren zur Herstellung eines mehrschichtigen Erzeugnisses gemäß Anspruch 1, **dadurch gekennzeichnet, dass** die zweite und dritte Schicht (B und C) in Form einer koextrudierten Folie oder zweier laminierter Folien im nachfolgenden Schritt mit Schicht D), die ein gegebenenfalls UV stabilisertes Polycarbonat enthält, hinterspritzt und anschließend mit Schicht (A) durch Fluten, Tauchen, Sprühen, Aufwalzen oder Aufschleudern versehen wird.

## Claims

1. A multilayer product comprising a first layer (A), a second layer (B), a third layer (C) and a fourth layer (D), where
the first layer (A) is a scratch-resistant protection layer which has an extinction value of at least 0.2 at 340 nm, comprising a UV absorber of the formula (I) 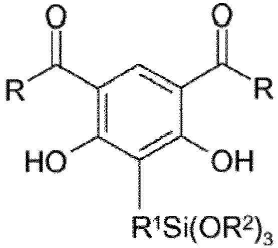 where R is a substituted or unsubstituted monocyclic or polycyclic aromatic moiety, R¹ is a branched or unbranched C₁-C₁₀-alkyl and R² is branched or unbranched C₁-C₆-alkyl,
the second layer (B) is a polyacrylate layer which comprises alkyl methacrylate as monomer unit and which has an extinction value of at least 2 at 340 nm, comprising a UV absorber of the formula (II) 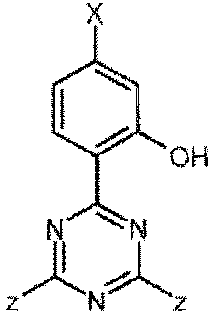 where
X is OR¹; OCH₂CH₂OR¹; OCH₂CH(OH)CH₂OR¹ or OCH(R²)COOR³,
R¹ is in each case C₁-C₁₃-alkyl, C₂-C₂₀-alkenyl, C₆-C₁₂-aryl or -CO-C₁-C₁₈-alkyl, R² is H or C₁-C₈-alkyl, and R³ is C₁-C₁₂-alkyl; C₂-C₁₂-alkenyl or C₅-C₆-cycloalkyl and
Z is mutually independently in each case an unsubstituted or mono- or poly-C₁-C₆-alkylsubstituted phenyl or biphenyl,
and
the third layer (C) comprises a UV-stabilized polycarbonate and the fourth layer (D) comprises an optionally UV-stabilized polycarbonate,
where the layers (B) and (C) take the form of a coextruded film or of two laminated films.

2. Multilayer product according to Claim 1, where layer (A) has an extinction value of at least 0.3 at 340 nm.

3. Multilayer product according to Claim 1, where layer (A) is based on sol-gel siloxane coating materials and has an extinction value of from 0.2 to 4 at 340 nm.

4. Multilayer product according to Claim 1, where layer (B) has an extinction value of from 2 to 9 at 340 nm.

5. Multilayer product according to Claim 1, where the UV absorber of the formula (I) is selected from 4,6-dibenzoyl-2-(3-trialkoxysilylalkyl)resorcinol and 4,6-dibenzoyl-2-(3-triethoxysilylpropyl)resorcinol.

6. Multilayer product according to Claim 1, where, in formula (II),
X is OR¹,
R¹ is CH₂CH (CH₂CH₃) C₄H₉ and
Z is biphenyl.

7. Multilayer product according to Claim 1, where at least one additional layer selected from (E) and (F) or one layer (G), where (E) is a further UV-protection layer based on alkyl acrylate comprising a UV stabilizer, (F) is a scratch-protection layer and (G) is a UV-stabilized scratch-protection layer.

8. Multilayer product according to Claim 7, where layer (E) comprises a UV absorber of the formula II, 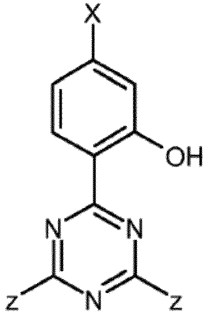 where
X is OCH(R²)COOR³
R² = CH₃ and R⁸ = C₈H₁₇ and Z is biphenyl.

9. Process for the production of a multilayer product according to Claim 1, **characterized in that**, in the subsequent step, the second and third layers (B) and (C), in the form of a coextruded film or of two laminated films, are in-mould coated with layer (D), which comprises an optionally UV-stabilized polycarbonate, and then are provided with layer (A) by flow coating, dip coating, spraying, roll-based application or spin-on coating.

## Revendications

1. Produit multicouche comprenant une première couche (A), une deuxième couche (B), une troisième couche (C) et une quatrième couche (D),
la première couche (A) étant une couche de protection contre les rayures, qui présente une extinction d'au moins 0,2 à 340 nm, contenant un absorbant des UV de formule (I) 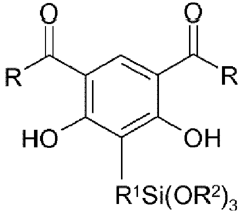 dans laquelle R signifie un radical aromatique monocyclique ou polycyclique, substitué ou non substitué, R¹ signifie C₁-C₁₀-alkyle ramifié ou non ramifié et R² signifie C₁-C₆-alkyle ramifié ou non ramifié,
la deuxième couche (B) étant une couche de polyacrylate, qui contient un méthacrylate d'alkyle comme élément monomère et qui présente une extinction d'au moins 2 à 340 nm, contenant un absorbant des UV de formule (II) 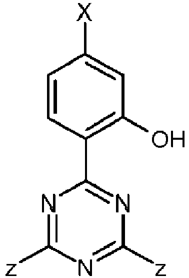 dans laquelle
X signifie OR¹ ; OCH₂CH₂OR¹ ; OCH₂CH (OH) CH₂OR¹ ou OCH(R²)COOR³, où
R¹ signifie à chaque fois C₁-C₁₃-alkyle, C₂-C₂₀-alcényle, C₆-C₁₂-aryle ou -CO-C₁-C₁₈-alkyle, R² représente H ou C₁-C₈-alkyle et R³ signifie C₁-C₁₂-alkyle ; C₂-C₁₂-alcényle ou C₅-C₆-cycloalkyle et
Z représente, indépendamment, à chaque fois phényle ou biphényle non substitué ou monosubstitué ou polysubstitué par C₁-C₆-alkyle et
la troisième couche (C) contient un polycarbonate stabilisé aux UV et la quatrième couche (D) contient un polycarbonate le cas échéant stabilisé aux UV,
la couche B) et la couche C) se trouvant sous forme d'une feuille coextrudée ou de deux feuilles stratifiées.

2. Produit multicouche selon la revendication 1, la couche (A) présentant une extinction d'au moins 0,3 à 340 nm.

3. Produit multicouche selon la revendication 1, la couche (A) étant à base de laques de siloxane de type sol-gel et présentant une extinction entre 0,2 et 4 à 340 nm.

4. Produit multicouche selon la revendication 1, la couche (B) présentant une extinction de 2 à 9 à 340 nm.

5. Produit multicouche selon la revendication 1, l'absorbant des UV de formule (I) étant choisi parmi le 4,6-dibenzoyl-2-(3-trialcoxysilylalkyl)-résorcinol et le 4,6-dibenzoyl-2-(3-triéthoxysilylpropyl)-résorcinol.

6. Produit multicouche selon la revendication 1, où, dans la formule (II),
X représente OR¹,
R¹ représente CH₂CH (CH₂CH₃) C₄H₉ et
Z représente biphényle.

7. Produit multicouche selon la revendication 1, au moins une couche supplémentaire choisie parmi (E) et (F) ou une couche (G) étant contenue(s), (E) étant une autre couche de protection contre les UV à base d'acrylate d'alkyle contenant un stabilisant aux UV, (F) étant une couche de protection contre les rayures et (G) étant une couche de protection contre les rayures stabilisée aux UV.

8. Produit multicouche selon la revendication 7, la couche (E) contenant un absorbant des UV de formule (II) , 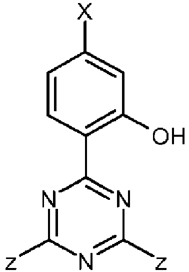 dans laquelle
X signifie OCH(R²)COOR³
R² = signifie CH₃ et R⁸ = C₈-H₁₇ et
Z signifie biphényle.

9. Procédé pour la fabrication d'un produit multicouche selon la revendication 1, **caractérisé en ce que** la deuxième et la troisième couche (B et C) sous forme d'une feuille coextrudée ou de deux feuilles stratifiées, sont pourvues dans l'étape suivante de la couche D), qui contient un polycarbonate le cas échéant stabilisé aux UV, par injection sur le côté arrière et ensuite par la couche (A) par arrosage, immersion, pulvérisation, laminage ou dépôt par rotation.
